# EUROPEAN PATENT APPLICATION

(11) **EP 4 733 063 A1**
(43) Date of publication of application: **29.04.2026**
(21) Application number: 24825858.4
(22) Date of filing: 17.06.2024
(51) Int. Cl.: B32B 27/00, B32B 3/10, B32B 7/023, E04F 13/07, E04F 13/08

(54) **DECORATIVE SHEET**

(30) Priority: 20.06.2023 JP 2023100842
(71) Applicant: Toppan Holdings Inc., Tokyo 110-0016 (JP)
(72) Inventor: AKUTSU, Erika, Tokyo 110-0016 (JP); SASAKI, Noriko, Tokyo 110-0016 (JP)
(74) Representative: TBK
(86) International application number: PCT/JP2024/021878
(87) International publication number: WO 2024/262457

(57) **Abstract**

A decorative sheet with improved scratch resistance and adherence between gloss-adjustment layers is provided. The decorative sheet (1) includes a primary film layer (2) and a surface protective layer. The surface protective layer includes a first gloss-adjustment layer (5) that is provided on the primary film layer (2) and contains only a cured product of a first ionizing radiation curable resin as a cured resin, the first ionizing radiation curable resin being a first mixture of an acrylate and a methacrylate, and a second gloss-adjustment layer (6) that partially covers an upper surface of the first gloss-adjustment layer (5), contains only a cured product of a second ionizing radiation curable resin as a cured resin, and has a lower specular gloss GS (60°) than the first gloss-adjustment layer (5).

## Description

### [Technical Field]

The present invention relates to decorative sheets.

### [Background Art]

Decorative materials used for decorating the surface of the interior and exterior of buildings; doors, windows, and fittings; furniture; and the like are generally in the form of decorative panels obtained by attaching a decorative sheet to the surface of a substrate via an adhesive or the like. Decorative sheets are typically provided with a desired pattern, such as a wood grain pattern or a stone pattern. Moreover, decorative sheets that not only two-dimensionally express design patterns, such as wood grain patterns and grain patterns, but also three-dimensionally express rough textures resembling the surface of natural wood materials or stone materials, have also been widely used mainly for applications for which a sense of luxury is desired.

As a method for expressing a three-dimensional rough texture together with a two-dimensional design pattern on the surface of decorative sheets, various methods have been proposed, and separately used depending on the purpose. For example, there is a method of visually expressing a three-dimensional rough texture by taking advantage of optical illusions by assigning a surface glossiness different from that of the other portions to the portions to be expressed as recesses or protrusions, rather than actually forming asperities on the surface of the decorative material. This allows an observer to recognize the portions with a relatively high glossiness as protrusions and the portions with a relatively low glossiness as recesses, even though there are no actual asperities noticeable to the observer.

In producing such decorative sheets, for example, first, a printed layer with a pattern corresponding to the portions where recesses are to be expressed is formed on one surface of a substrate. Next, a transparent or semi-transparent first gloss-adjustment layer having a low glossiness is formed over the entire surface of the substrate on which the print layer has been formed. Then, a transparent or semi-transparent second gloss-adjustment layer having a high glossiness is formed over the entire surface of the first gloss-adjustment layer except for the area corresponding to the above-mentioned pattern. Note that a decorative sheet in which the recess-protrusion relationship is inverted can be obtained by swapping the high and low levels of glossiness between the first and second gloss-adjustment layers.

This method can easily impart a three-dimensional rough texture to any substrate by preparing only two coating materials that give different levels of glossiness, without requiring special chemicals or the like. Further, the gloss-adjustment layers having different levels of glossiness can be formed by a conventional printing method such as gravure printing, following the formation of the design pattern (patterned ink layer). Therefore, no special equipment is required, the production efficiency is high, and the alignment of a second gloss-adjustment layer with the above-mentioned pattern is easy. Since the thickness of the second gloss-adjustment layer can be made much smaller than the height difference of asperities to be perceived by the observer, use of resins can be reduced and there is an advantage of flexibility. Thus, a decorative sheet having high suitability for bending can be easily realized. In addition, there is another advantage of preventing contaminants from remaining in the recesses because the surface of the decorative sheet has no asperities with a large height difference.

### [Citation List]

### [Patent Literature]

[PTL 1] WO 2022/182259 A
[PTL 2] JP 2014-188842 A

### [Summary of the Invention]

An object of the present invention is to provide a decorative sheet with improved scratch resistance and adherence between gloss-adjustment layers.

An aspect of the present invention provides
a decorative sheet including a primary film layer and a surface protective layer, in which the surface protective layer includes
a first gloss-adjustment layer that is provided on the primary film layer and contains only a cured product of a first ionizing radiation curable resin as a cured resin, the first ionizing radiation curable resin being a first mixture of an acrylate and a methacrylate, and
a second gloss-adjustment layer that partially covers an upper surface of the first gloss-adjustment layer, contains only a cured product of a second ionizing radiation curable resin as a cured resin, and has a lower specular gloss GS (60°) than the first gloss-adjustment layer.

Another aspect of the present invention provides the decorative sheet according to the above aspect, in which in the first ionizing radiation curable resin, a proportion of a number of moles of methacryloyl groups to a sum of a number of moles of acryloyl groups and the number of moles of methacryloyl groups is in a range of 3% or more and 50% or less.

Still another aspect of the present invention provides the decorative sheet according to any one of the above aspects, in which the methacrylate is a monofunctional, difunctional or trifunctional methacrylate.

Still another aspect of the present invention provides the decorative sheet according to any one of the above aspects, in which the second ionizing radiation curable resin is an acrylate or a second mixture of an acrylate and a methacrylate, and a proportion of a number of moles of methacryloyl groups to a sum of a number of moles of acryloyl groups and the number of moles of methacryloyl groups in the second mixture is smaller than that in the first mixture.

Still another aspect of the present invention provides the decorative sheet according to any one of the above aspects, in which the second ionizing radiation curable resin contains a di- or higher functional acrylate having a repeating structure.

Still another aspect of the present invention provides the decorative sheet according to any one of the above aspects, in which the number of repetitions of the repeating structure is 3 or more.

Still another aspect of the present invention provides the decorative sheet according to any one of the above aspects, in which a surface of the second gloss-adjustment layer is provided with an uneven structure including a plurality of ridge portions each protruding in a ridge-like manner.

Still another aspect of the present invention provides the decorative sheet according to any one of the above aspects, in which the uneven structure has a ratio RSm/Ra of a mean width RSm of roughness profile elements to an arithmetic mean roughness Ra that is in the range of 10 or more and 900 or less, preferably in the range of 10 or more and 500 or less.

Still another aspect of the present invention provides the decorative sheet according to any one of the above aspects, in which the first and second gloss-adjustment layers each have a thickness in the range of 2 µm or more and 20 µm or less.

Still another aspect of the present invention provides the decorative sheet according to any one of the above aspects, in which the second gloss-adjustment layer further contains particles with a mean particle size of 10 µm or less.

Still another aspect of the present invention provides the decorative sheet according to any one of the above aspects, in which a mass of the particles contained in the second ionizing radiation curable resin is in the range of 0.5 parts by mass or more and 20 parts by mass or less of the particles, relative to 100 parts by mass of the second ionizing radiation curable resin.

Still another aspect of the present invention provides the decorative sheet according to any one of the above aspects, in which the first gloss-adjustment layer has a specular gloss GS (60°) of 3 or more, and the second gloss-adjustment layer has a specular gloss GS (60°) of 20 or less, preferably 10 or less.

Still another aspect of the present invention provides the decorative sheet according to any one of the above aspects, in which a difference between a specular gloss GS (60°) of the first gloss-adjustment layer and a specular gloss GS (60°) of the second gloss-adjustment layer is 1 or more.

Still another aspect of the present invention provides a decorative material including the decorative sheet according to any one of the above aspects, and a substrate to which the decorative sheet is attached.

Still another aspect of the present invention provides a method of manufacturing a decorative sheet, the method including:
forming a first coating film on a primary film layer, the first coating film containing only a first ionizing radiation curable resin as a resin, the first ionizing radiation curable resin being a first mixture of an acrylate and a methacrylate;
performing a first irradiation step in which the first coating film is irradiated with an ionizing radiation or ultraviolet light to semi-cure the first coating film; forming a second coating film on the semi-cured first coating film so as to partially cover an upper surface of the first coating film, the second coating film containing only a second ionizing radiation curable resin as a resin; and irradiating the first and second coating films with an ionizing radiation or ultraviolet light to completely cure the first and second coating films.

Still another aspect of the present invention provides the method of manufacturing a decorative sheet according to the above aspect, in which completely curing the first and second coating films includes a second irradiation step in which the second coating film is irradiated with light having a wavelength of 200 nm or less, and a subsequent third irradiation step in which the first and second coating films are irradiated with an ionizing radiation or ultraviolet light having a longer wavelength than the light emitted in the second irradiation step.

According to the present invention, a decorative sheet with improved scratch resistance and adherence between gloss-adjustment layers is provided.

### [Brief Description of the Drawings]

Fig. 1 is a cross-sectional view of a decorative material including a decorative sheet according to an embodiment of the present invention.
Fig. 2 is a cross-sectional view of a second gloss-adjustment layer of the decorative sheet of Fig. 1.
Fig. 3 is a micrograph of the second gloss-adjustment layer of a decorative sheet according to an example of the present invention.
Fig. 4 is an enlarged cross-sectional view showing part of the second gloss-adjustment layer shown in Fig. 2.

### [Description of the Embodiments]

With reference to the drawings, some embodiments of the present invention will be described. The embodiments described below are more specific examples of any of the aspects described above. The matters described below can be incorporated alone or in combination into each of the above aspects.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from actual ones.

### <1> Decorative material and decorative sheet

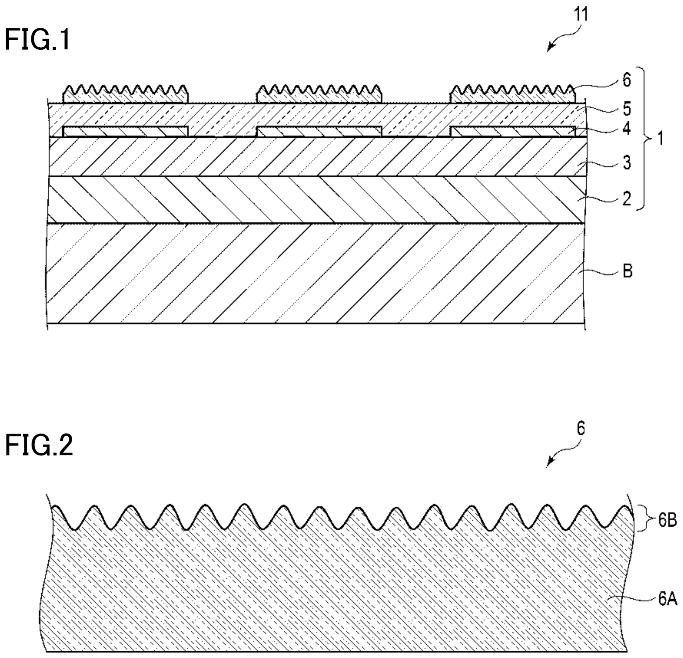

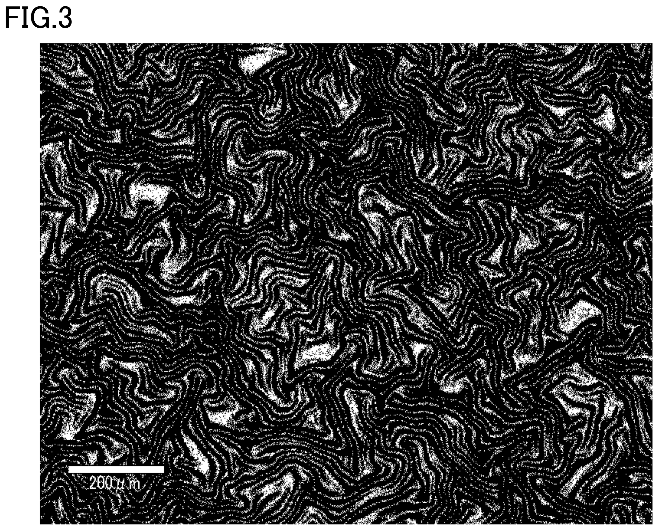

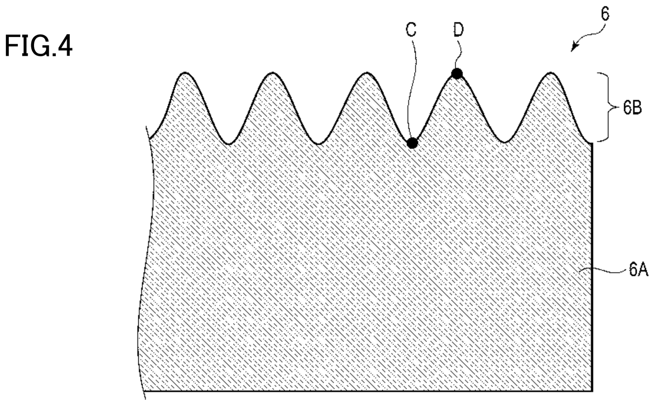

Fig. 1 is a cross-sectional view of a decorative material including a decorative sheet according to an embodiment of the present invention. Fig. 2 is a cross-sectional view of a second gloss-adjustment layer of the decorative sheet of Fig. 1. Fig. 3 is a micrograph of the second gloss-adjustment layer of a decorative sheet according to an example of the present invention. Fig. 4 is an enlarged cross-sectional view showing part of the second gloss-adjustment layer shown in Fig. 2.

Note that the cross sections shown in Figs. 2 and 4 are taken along the thickness direction of the second gloss-adjustment layer. The micrograph in Fig. 3 is a photograph of a plane surface taken with a laser microscope (OLS-4000, manufactured by Olympus Corporation).

A decorative material 11 shown in Fig. 1 includes a substrate B and a decorative sheet 1 attached thereto. Here, the decorative material 11 is a decorative panel. The decorative panel may be may be flat, bent, or folded. The decorative material 11 may have a shape other than a plate.

The substrate B is a board material. The board material is, for example, a wood board, an inorganic board, a metal plate, or a composite board made of multiple materials. The substrate B may have a shape other than a plate.

The decorative sheet 1 includes a primary film layer 2, a solid ink layer 3, a patterned ink layer 4, a first gloss-adjustment layer 5, and a second gloss-adjustment layer 6. The solid ink layer 3, the patterned ink layer 4, and the first and second gloss-adjustment layers 5 and 6 are provided on the surface of the primary film layer 2 opposite to the surface facing the substrate B, in this order as seen from the primary film layer 2. One or more other layers such as a transparent resin layer may be provided between the patterned ink layer 4 and the first gloss-adjustment layer 5. A primer layer may be provided on one or more of the primary film layer 2, the solid ink layer 3, and the patterned ink layer 4. Either or both of the solid ink layer 3 and the patterned ink layer 4 may be omitted.

Components of the decorative sheet 1 will be explained below in order.

### <1. 1> Primary film layer

The primary film layer 2 or an material thereof may be selected from paper, such as tissue paper, resin-mixed paper, titanium paper, resin-impregnated paper, flame-resistant paper, and inorganic paper; woven or non-woven fabrics made of natural fibers or synthetic fibers; synthetic resin-based substrates that contain synthetic resins including polyolefin resins such as homo- or random polypropylene resins and polyethylene resin, copolymerized polyester resins, amorphous-state crystalline polyester resins, polyethylene naphthalate resins, polybutylene resins, acrylic resins, polyamide resins, polycarbonate resins, polyvinyl chloride resins, polyvinylidene chloride resins, and fluororesins; wooden substrates, such as wood veneers, sliced veneers, plywood, laminate wood, particle boards, and medium density fiberboards; inorganic substrates, such as gypsum plates, cement plates, calcium silicate plates, and pottery plates; metal-based substrates of metals such as iron, copper, aluminum, and stainless steel; or composite materials or laminates thereof. The primary film layer 2 may have various forms such as a film, a sheet, a plate, and a profile-extruded member.

### <1. 2> Solid Ink Layer

The solid ink layer 3 is a continuous film formed by entirely covering one surface of the primary film layer 2 with ink. The solid ink layer 3 may serve as a concealing layer that conceals the substrate B or the primary film layer 2. The solid ink layer 3 may also serve as a planarizing layer. The solid ink layer 3 may have a single-layer structure or a multilayer structure.

The solid ink layer 3 can be formed by, for example, using a printing ink (or a coating agent) in which a matrix and a coloring agent, such as dye or pigment, are dissolved or dispersed in a solvent.

Examples of the matrix include various synthetic resins, such as oily nitrocellulose resin, two-component urethane resin, acrylic resin, styrene-based resin, polyester-based resin, urethane-based resin, polyvinyl-based resin, alkyd resin, epoxy-based resin, melamine-based resin, fluororesin, silicone-based resin, and rubber-based resin; and mixtures and copolymers thereof.

Examples of the coloring agent include inorganic pigments, such as carbon black, titanium white, zinc white, rouge, chrome yellow, Prussian blue, and cadmium red; organic pigments, such as azo pigments, lake pigments, anthraquinone pigments, phthalocyanine pigments, isoindolinone pigments, and dioxazine pigments; and mixtures thereof.

Examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

In order to impart various functions, functional additives such as an extender, a plasticizer, a dispersant, a surfactant, a tackifier, an adhesion aid, a desiccant, a curing agent, a curing accelerator, and a curing retarder may be added to the ink.

### <1. 3> Patterned ink layer

The patterned ink layer 4 is provided to impart a design pattern to the decorative sheet 1. The design pattern is, for example, of wood grain, stone, sand, tile, brick, fabric, grained leather, or a geometric figure. In the example of Fig. 1, the patterned ink layer 4 is a printed pattern that partially covers the upper surface of the solid ink layer 3. This printed pattern is provided directly beneath the second gloss-adjustment layer. In other words, the second gloss-adjustment layer 6 is provided so as to overlap the patterned ink layer 4. That is, the printed pattern included in the patterned ink layer 4 and the pattern of the second gloss-adjustment layer 6 are identical in shape and position when orthogonally projected onto a plane perpendicular to the thickness direction. Note that, in the following, being identical in shape and position when orthogonally projected onto a plane perpendicular to the thickness direction may be simply referred to as "identical in shape and position".

The patterned ink layer 4 can be formed by, for example, using the ink described above regarding the solid ink layer 3. The patterned ink layer 4 is formed using any number of printing plates necessary for expression of the desired design. In other words, the patterned ink layer 4 may be a layer with one printed pattern formed with a single ink, or may be a layer consisting of a plurality of printed patterns formed with different inks. In the latter case, one printed pattern may be identical in shape and position to the pattern of the second gloss-adjustment layer 6, or a combination of two or more printed patterns may be identical in shape and position to the pattern of the second gloss-adjustment layer 6. For example, one printed pattern or a combination of two or more printed patterns is identical in shape and position to the pattern of the second gloss-adjustment layer 6, and the remaining printed patterns may be located in areas corresponding to openings of the second gloss-adjustment layer 6.

When the patterned ink layer 4 has only one printed pattern, this printed pattern has a different color from the solid ink layer 3. When the patterned ink layer 4 has a plurality of printed patterns and the combination of these printed patterns is identical in shape and position to the pattern of the second gloss-adjustment layer 6, one or more of these printed patterns, for example all of these printed patterns, have a different color from the solid ink layer 3. When the patterned ink layer 4 has a plurality of printed patterns, one printed pattern or a combination of two or more printed patterns is identical in shape and position to the pattern of the second gloss-adjustment layer 6, and the remaining printed patterns are located in areas corresponding to openings of the second gloss-adjustment layer 6, one or more of the former printed patterns have a different color from the solid ink layer 3 and one or more of the latter printed patterns. For example, all of the former printed patterns have a different color from the solid ink layer 3 and all of the latter printed patterns.

Here, as an example, it is assumed that the patterned ink layer 4 is a layer with one printed pattern made of a single ink, and has a different color from the solid ink layer 3.

### <1. 4> Transparent Resin Layer

As described above, the decorative sheet 1 can further include a transparent resin layer between the patterned ink layer 4 and the first gloss-adjustment layer 5. The transparent resin layer may contribute to improving the wear resistance of the decorative sheet 1.

For example, a resin composition containing an olefin-based resin as a main component is preferably used for the transparent resin layer. The olefin-based resin may be, for example, polypropylene, polyethylene, or polybutene. The olefin-based resin may be a homopolymer or copolymer of two or more α-olefins such as propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. The olefin-based resin may be a copolymer of ethylene or an α-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, or an ethylene-butyl acrylate copolymer. In particular, in order to further improve surface strength, highly crystalline polypropylene is preferably used.

The transparent resin layer may contain additives, such as a heat stabilizer, an ultraviolet absorber, a light stabilizer, an antiblocking agent, a catalyst scavenger, and a coloring agent. These additives may be suitably selected from known additives. The transparent resin layer can be formed by various lamination methods such as a method using thermal pressure, extrusion lamination, and dry lamination.

### <1. 5> Primer layer

As described above, a primer layer can be provided on one or more of the primary film layer 2, the solid ink layer 3, and the patterned ink layer 4.

When an olefin-based resin is used as the material of the primary film layer 2, the surface of the primary film layer 2 is inactivated in many cases. Therefore, in such cases, a primer layer is preferably provided between the primary film layer 2 and the substrate B. When the primary film layer 2 is made of an olefin-based material, in order to omit this primer layer and also to improve adhesion between the primary film layer 2 and the substrate B, the primary film layer 2 may be subjected to a surface modification treatment such as corona treatment, plasma treatment, ozone treatment, electron beam treatment, ultraviolet ray treatment, or dichromate treatment.

The material of the primer layer may be, for example, one or a combination of two or more selected from nitrocellulose, cellulose, vinyl chloride-vinyl acetate copolymer, polyvinyl butyral, polyurethane, acrylic, polyester, and modified products thereof. It may be any of aqueous, solvent, and emulsion types, and may be a one-part type or a two-part type that uses a hardener. The primer layer may be formed by curing a curable ink layer by irradiating it with ultraviolet light, electron beams, or the like. The most common method among these is to use a urethane ink which is cured with an isocyanate. The ink used to form the primer layer may further contain, in addition to the binder, any of various additives included in a typical ink, and examples include coloring agents such as pigments or dyes, extender pigments, and solvents. Examples of highly versatile pigments include condensed azo, insoluble azo, quinacridone, isoindoline, anthraquinone, imidazolone, cobalt, phthalocyanine, carbon, titanium oxide, iron oxide, and pearl pigments of mica.

Since the primer layer is applied to the back surface of the decorative sheet 1, considering the situation in which the decorative sheet 1 is in web form to be rolled up, an inorganic filler may be added to the primer layer to avoid blocking and to increase adhesion to the adhesive. Examples of inorganic fillers include silica, alumina, magnesia, titanium oxide, and barium sulfate.

### <1. 6> First Gloss-adjustment Layer

The first gloss-adjustment layer 5 is provided on the primary film layer 2. Here, the first gloss-adjustment layer 5 covers the solid ink layer 3 and the patterned ink layer 4.

The first gloss-adjustment layer 5 has a higher specular gloss GS (60°) than the second gloss-adjustment layer 6. The specular gloss GS (60°) of the first gloss-adjustment layer 5 is preferably 3 or more, more preferably 5 or more, and even more preferably 7 or more. In one example, the specular gloss GS (60°) of the first gloss-adjustment layer 5 is 30 or lower. The "specular gloss GS (60°)" is a specular gloss measured at an incidence angle of 60° using a glossmeter conforming to ISO 2813. Although specular gloss GS (60°) is sometimes expressed by adding "%" after the numerical value, "%" is omitted here.

The first gloss-adjustment layer 5 is made of a cured resin. The first gloss-adjustment layer 5 may further contain particles. Based on 100 parts by mass of the first gloss-adjustment layer 5, preferably 60 parts by mass or more, more preferably 70 parts by mass or more, and even more preferably 80 parts by mass or more of cured resin is contained in the first gloss-adjustment layer 5.

The first gloss-adjustment layer 5 contains only a cured product of a first ionizing radiation curable resin as the cured resin. Here, "ionizing radiation" refers to a charged particle beam such as an electron beam. The first ionizing radiation curable resin is cured by exposure to ionizing radiation. The first ionizing radiation curable resin can also be cured by exposure to ultraviolet light.

The first ionizing radiation curable resin can be a known resin selected from various monomers, commercially available oligomers, and the like. For example, (meth)acrylic resin, silicone resin, polyester resin, urethane resin, amide resin, or epoxy resin can be used. The second ionizing radiation curable resin may be either an aqueous resin or non-aqueous (organic solvent-based) resin. The second ionizing radiation curable resin may be solvent-free.

A main component of the first ionizing radiation curable resin is a first mixture of an acrylate resin and methacrylate resin.

The methacrylate is preferably a monofunctional, difunctional or trifunctional methacrylate. The methacrylate may be any one of a monofunctional methacrylate, difunctional methacrylate, and trifunctional methacrylate, or may be two or more of these.

When a methacrylate with a large number of functional groups is used, the degree of crosslinking is increased and scratch resistance is improved compared to when a methacrylate having a small number of functional groups is used. However, if a methacrylate with too many functional groups is used, the rate of the crosslinking reaction caused by irradiation with ionizing radiation or ultraviolet light increases, narrowing the process window in which high adhesion between the first and second gloss-adjustment layer 5 and 6 can be achieved.

In the first ionizing radiation curable resin, the proportion of the number of moles of methacryloyl groups to the sum of the number of moles of acryloyl groups and the number of moles of methacryloyl groups is preferably in the range of 3% or more and 50% or less, more preferably in the range of 5% or more and 40% or less.

The methacrylate allows a first coating film containing the first ionizing radiation curable resin to be semi-cured by irradiation with ionizing radiation or ultraviolet light. By increasing the above proportion, the process window in which high adhesion between the first and second gloss-adjustment layers 5 and 6 can be achieved is widened. However, the scratch resistance of the decorative sheet 1 decreases if the above proportion is excessively large.

The thickness of the first gloss-adjustment layer 5 is preferably in the range of 2 µm or more and 20 µm or less, more preferably in the range of 3 µm or more and 20 µm or less, and further preferably in the range of 5 µm or more and 15 µm or less. The scratch resistance decreases when the thickness of the first gloss-adjustment layer 5 is increased. When the thickness of the first gloss-adjustment layer 5 is increased, the processability of the decorative sheet 1 decreases, and the decorative sheet 1 becomes more susceptible to whitening when folded.

### <1. 7> Second Gloss-adjustment Layer

The second gloss-adjustment layer 6 partially covers the upper surface of the first gloss-adjustment layer 5. Together with the first gloss-adjustment layer 5, the second gloss-adjustment layer 6 forms a surface protective layer.

The second gloss-adjustment layer 6 faces the patterned ink layer 4 with the first gloss-adjustment layer 5 sandwiched therebetween. The second gloss-adjustment layer 6 is identical in shape and position to the patterned ink layer 4.

In this embodiment, the second gloss-adjustment layer 6 is completely identical in shape and position to the patterned ink layer 4. However, other configurations can also be adopted. For example, the orthogonal projection of the patterned ink layer 4 onto a plane perpendicular to the thickness direction may be at least partially spaced from and located inside the contour of the orthogonal projection of the second gloss-adjustment layer 6 onto the plane.

Here, the patterned ink layer 4 is made of a single printed pattern; however, if the patterned ink layer 4 consists of a plurality of printed patterns of different colors, the second gloss-adjustment layer 6 may be identical in shape and position to a combination of these printed patterns. Alternatively, in such case, the second gloss-adjustment layer 6 is identical in shape and position to one or a combination of two or more of these printed patterns, and the remaining printed patterns may be provided at positions where they do not directly face the second gloss-adjustment layer 6.

Preferably 50% or more, more preferably 70% or more, and even more preferably 90% or more of the area of the orthogonal projection of the second gloss-adjustment layer 6 onto a plane perpendicular to the thickness direction overlaps the orthogonal projection of one printed pattern or a combination of two or more printed patterns that is identical in shape and position to the second gloss-adjustment layer 6 onto the same plane.

The second gloss-adjustment layer 6 has a lower specular gloss GS (60°) than the first gloss-adjustment layer 5. The specular gloss GS (60°) of the second gloss-adjustment layer 6 is preferably 20 or lower and more preferably 10 or lower. In one example, the specular gloss GS (60°) of the second gloss-adjustment layer 6 is 0.5 or more.

The difference in specular gloss GS (60°) between the first and second gloss-adjustment layers 5 and 6 is preferably 1 or more, more preferably 3 or more, and even more preferably 5 or more. According to one example, this difference is 20 or lower.

The surface of the second gloss-adjustment layer 6 is provided with an uneven structure. The uneven structure on the upper surface of the second gloss-adjustment layer 6 serves to make the specular gloss GS (60°) of the second gloss-adjustment layer 6 lower compared to that of the first gloss-adjustment layer 5.

Here, the surface of the second gloss-adjustment layer 6 is provided with an uneven structure including a plurality of ridge portions each protruding like a ridge. In other words, as shown in Figs. 2 and 4, the second gloss-adjustment layer 6 includes a core portion 6A that is a thin layer having a flat upper surface, and a plurality of ridge portions 6B each protruding like a ridge from the upper surface of the core portion 6A.

Here, in the present disclosure, the ridge portions 6B refer to, for example, the portions from the lowest part to the tip of the protrusions provided on the surface of the second gloss-adjustment layer 6, and the core portion 6A refers to the portion of the second gloss-adjustment layer 6 excluding the ridge portions 6B. The term "ridge" refers to a linearly extending raised feature in plan view.

The ridge portions 6B may be curved or straight in plan view. However, as shown by the example in Fig. 3, they are preferred to be curved from the perspective of fingerprint resistance of the surface of the decorative sheet 1. Note that the second gloss-adjustment layer 6 having the ridge portions 6B can be formed, for example, as described below, by irradiating the surface of a coating film containing the second ionizing radiation curable resin with light of a specific wavelength to cause the cured film formed on the surface of the coating film to expand in an in-plane direction.

The uneven structure provided on upper surface of the second gloss-adjustment layer 6 is preferably configured so that a ratio RSm/Ra of a mean width RSm of the roughness profile elements to an arithmetic mean roughness Ra is in the range of 10 or more and 900 or less, more preferably in the range of 10 or more and 500 or less, even more preferably in the range of 10 or more and 400 or less, and even more preferably in the range of 50 or more and 350 or less. When the ratio RSm/Ra is decreased, the pitch of the protrusions decreases. This makes it difficult to wipe off stains on the surface of the decorative sheet 1 and therefore reduces its stain resistance. When the ratio RSm/Ra is increased, the pitch of the protrusions increases. This reduces the effect of the uneven structure to reduce the specular gloss GS (60°) of the second gloss-adjustment layer 6.

The ratio RSm/Ra is more preferably 80 or more. When the ratio RSm/Ra is increased, the pitch of the protrusions increases. This improves the affinity of the upper surface of the second gloss-adjustment layer 6 for water or a cleaning agent (water that contains a surfactant or alcohol). If the decorative sheet 1 has a second gloss-adjustment layer 6 with such surface properties, stains can be easily wiped off with water or a cleaning agent even if its surface is stained.

The ratio RSm/Ra is most preferably 100 or more. If the ratio RSm/Ra is within this range, a commercially available cleaning sponge can reach the boundaries of the protrusions on the upper surface of the second gloss-adjustment layer 6 and the areas near the boundaries. Therefore, even if the surface of the decorative sheet 1 is stained, the stains can be easily wiped off using a commercially available cleaning sponge.

Here, the arithmetic mean roughness Ra and the mean width RSm of the roughness profile elements are values measured using a line roughness gauge (according to JIS B 0601: 2013).

The arithmetic mean roughness Ra is preferably in the range of 0.2 µm or more and 10.0 µm or less, more preferably in the range of 0.5 µm or more and 5.0 µm or less, and further preferably in the range of 0.8 µm or more and 4.0 µm or less.

The mean width RSm of the roughness profile elements is preferably in the range of 50 µm or more and 800 µm or less, more preferably in the range of 80 µm or more and 600 µm or less, and even more preferably in the range of 100 µm or more and 500 µm or less.

The upper surface of the second gloss-adjustment layer 6 may have a sinusoidal shape in a cross section parallel to the thickness direction and the direction in which the ridge portions 6B are arranged. The sinusoidal shape herein refers to a shape, as shown in Fig. 4, in which the line from the lowest point C of the ridge portions 6B to the highest point D (apex) can be expressed as a sine wave.

The thickness of the second gloss-adjustment layer 6 is preferably in the range of 2 µm or more and 20 µm or less, more preferably in the range of 3 µm or more and 20 µm or less, further preferably in the range of 5 µm or more and 15 µm or less, and most preferably in the range of 5 µm or more and 12 µm or less. When the thickness of the second gloss-adjustment layer 6 is small, it is difficult to realize the surface properties described above referring to the ratio RSm/Ra and the like by the method described below. When the thickness of the second gloss-adjustment layer 6 is increased, the processability of the decorative sheet 1 decreases, and the decorative sheet 1 becomes more susceptible to whitening when folded.

The thickness of the second gloss-adjustment layer 6 is the thickness of a layer that has the same apparent area and volume as the second gloss-adjustment layer 6 and has a flat surface. The thickness of the second gloss-adjustment layer 6 is determined, for example, as follows. First, a cross section that is parallel to the thickness direction of the second gloss-adjustment layer 6 and perpendicular to the length direction of the ridge portions 6B is imaged. Next, from this cross-sectional image, the dimension of the second gloss-adjustment layer 6 in the width direction of the ridge portions 6B, and the area of the cross section of the second gloss-adjustment layer 6 are obtained. The thickness of the second gloss-adjustment layer 6 is a value obtained by dividing this area by the dimension. If the coating liquid for the second gloss-adjustment layer, which will be described later, does not contain a solvent, the thickness of the coating film made using this coating liquid is equal to the thickness of the second gloss-adjustment layer 6.

The thickness of the second gloss-adjustment layer 6 is preferably set so that the ratio between the thickness (or height) of the ridge portions 6B and the thickness of the core portion 6A (thickness of ridge portions 6B / thickness of core portion 6A) is in the range of 0.01 or more and 2.0 or less, and more preferably set so that the ratio is in the range of 0.1 or more and 1.0 or less.

The second gloss-adjustment layer 6 contains a cured resin. As described below, the second gloss-adjustment layer 6 may further contain particles. Based on 100 parts by mass of the second gloss-adjustment layer 6, preferably 60 parts by mass or more, more preferably 70 parts by mass or more, and even more preferably 80 parts by mass or more of cured resin is contained in the second gloss-adjustment layer 6.

The second gloss-adjustment layer 6 contains only a cured product of the second ionizing radiation curable resin as the cured resin. As described above, ionizing radiation refers to a charged particle beam such as an electron beam. The second ionizing radiation curable resin is cured by exposure to ionizing radiation. The second ionizing radiation curable resin can also be cured by exposure to ultraviolet light. The second ionizing radiation curable resin used here is cured by exposure to light having a wavelength of 200 nm or less, and has a large absorption coefficient for this light.

The second ionizing radiation curable resin can be a known resin selected from various monomers, commercially available oligomers, and the like. For example, (meth)acrylic resin, silicone resin, polyester resin, urethane resin, amide resin, or epoxy resin can be used. The second ionizing radiation curable resin may be either an aqueous resin or non-aqueous (organic solvent-based) resin. The second ionizing radiation curable resin may be solvent-free.

A main component of the second ionizing radiation curable resin is preferably acrylate. The term main component refers to the material being contained preferably at 60 parts by mass or more, more preferably 70 parts by mass or more, and most preferably 80 parts by mass or more, relative to 100 parts by mass of the resin composition.

The acrylate is preferably a di- or higher functional acrylate, and more preferably a tri- or higher functional acrylate. To obtain a second gloss-adjustment layer 6 having good scratch resistance, the acrylate is preferably a tri- or higher functional acrylate. Although there is no upper limit to the number of functional groups of the acrylate, it is six or less according to one example.

The acrylate preferably has a repeating structure. This repeating structure is, for example, any one of an ethylene oxide (EO) structure, a propylene oxide (PO) structure, and an ε-caprolactone (CL) structure. The repeating structure is preferably ethylene oxide or propylene oxide. In the acrylate, the repeating structure may be located between the acryloyl group and the methylol group when the ring is open.

The repeating structure preferably has a number of repetitions that is three or more. If an acrylate having a large number of repetitions is used, the cured film tends to expand in the in-plane direction in a second irradiation step described below. As a result, wrinkles corresponding to the ridge portions 6B are more likely to appear on the coating surface. However, if the number of repetitions is large, the crosslink density decreases, and the scratch resistance of the surface protective layer decreases. The number of repetitions is therefore preferably 30 or less and more preferably 20 or less.

The number of repetitions of the repeating structure can be analyzed by using MALDI-TOF-MS. The ionizing radiation curable resin may have a molecular weight distribution. If there is a molecular weight distribution, the number of repetitions is set to the number of repetitions corresponding to the molecular weight having the most intense peak in the MALDI-TOF-MS mass spectrum.

If the second ionizing radiation curable resin contains an acrylate, it may further contain a methacrylate. For example, the second ionizing radiation curable resin may be a second mixture of acrylate and methacrylate. The proportion of the number of moles of methacryloyl groups to the sum of the number of moles of acryloyl groups and the number of moles of methacryloyl groups in the second mixture may be smaller than that in the first mixture. The proportion in the second mixture is preferably 90% or less, and more preferably 80% or less of the above proportion in the first mixture.

The second gloss-adjustment layer 6 may further contain particles in addition to cured resin.

Examples of the particles contained in the second gloss-adjustment layer 6 include particles of organic materials such as polyethylene (PE) wax, polypropylene (PP) wax, and resin beads, and particles of inorganic materials such as silica, glass, alumina, titania, zirconia, calcium carbonate, and barium sulfate.

A mean particle size (D50) of the particles is preferably 10 µm or less, more preferably in the range of 1 µm or more and 8 µm or less, even more preferably in the range of 2 µm or more and 7 µm or less, and most preferably in the range of 3 µm or more and 6 µm or less. When the mean particle size (D50) of the particles is increased, the particles are more likely to fall off from the second gloss-adjustment layer 6, which may make it difficult to achieve high scratch resistance. When small particles are used, the effect of forming the wrinkles uniformly decreases.

Here, the "mean particle size" or "mean particle size (D50)" is a median diameter (D50) measured by a laser diffraction/scattering particle size analyzer. Note that, when the coating liquid for the second gloss-adjustment layer contains particles, the second gloss-adjustment layer 6 obtained from this coating liquid also contains particles. The mean particle size of the particles contained in the second gloss-adjustment layer 6 can be determined by observing a cross section thereof and averaging the particle sizes of a plurality of particles. The value thus obtained is substantially the same as the median diameter (D50) measured by a laser diffraction/scattering particle size analyzer. Therefore, the above range of mean particle size can also be read as the range of mean particle size of the particles contained in the second gloss-adjustment layer.

Based on 100 parts by mass of the cured resin, the amount of particles in the second gloss-adjustment layer 6 is preferably in the range of 0.5 parts by mass or more and 20 parts by mass or less, more preferably in the range of 0.5 parts by mass or more and 10 parts by mass or less, more preferably in the range of 2 parts by mass or more and 8 parts by mass or less, and most preferably in the range of 2 parts by mass or more and 6 parts by mass or less.

When the amount of particles added is within the above range, the effect of forming wrinkles uniformly is particularly large. When the amount of particles added is too large, the particles are likely to become detached from the second gloss-adjustment layer 6, which may make it difficult to achieve high scratch resistance.

### <2> Method for producing decorative sheet

For example, the decorative sheet 1 is manufactured by the following method.

First, the solid ink layer 3 is formed on one surface of the primary film layer 2. This solid ink layer 3 can be formed by various printing methods, such as gravure printing, offset printing, screen printing, electrostatic printing, and inkjet printing, as well as various coating methods, such as roll coating, knife coating, microgravure coating, and die coating.

Next, the patterned ink layer 4 is formed on the solid ink layer 3. The patterned ink layer 4 can be formed by various printing methods, such as gravure printing, offset printing, screen printing, electrostatic printing, and ink-jet printing. Gravure printing is particularly preferred to be used because it allows for relatively high speed printing, and therefore is also advantageous in terms of costs.

Next, a first coating film made using a coating liquid for the first gloss-adjustment layer is formed on the above-mentioned surface of the primary film layer 2 so as to cover the solid ink layer 3 and the patterned ink layer 4. This first coating film can be formed by various printing methods, such as gravure printing, offset printing, screen printing, electrostatic printing, and inkjet printing, as well as various coating methods, such as roll coating, knife coating, microgravure coating, and die coating.

The coating liquid for the first gloss-adjustment layer contains the above-described first ionizing radiation curable resin. As described above, the first ionizing radiation curable resin is the first mixture of an acrylate and methacrylate.

The coating liquid for the first gloss-adjustment layer may further contain one or more other components, for example, the above-described particles, solvents, and additives for improving the functionality of the final product, such as an antibacterial agent and an antifungal agent. The coating liquid for the first gloss-adjustment layer may further contain another additive such as an ultraviolet absorber or a light stabilizer. Examples of ultraviolet absorbers include benzotriazole-based ultraviolet absorbers, benzoate-based ultraviolet absorbers, benzophenone-based ultraviolet absorbers, and triazine-based ultraviolet absorbers. Examples of light stabilizers include hindered amine-based light stabilizers.

In a third irradiation step described below, if the first coating film is to be completely cured by exposure to ultraviolet light, it is preferable that the coating liquid for the first gloss-adjustment layer further contains a photoinitiator. The photoinitiator is not specifically limited, but examples thereof include benzophenone-, acetophenone-, benzoin ether-, and thioxanthone-based photoinitiators.

Subsequently, the first irradiation step is carried out. In the first irradiation step, the first coating film is irradiated with a first radiation to so that the first coating film is semi-cured. Here, "semi-cured" refers to a state in which the coating film has become solid but still contains a sufficient number of C=C bonds originating from the acryloyl groups and methacryloyl groups.

The first radiation is, for example, ionizing radiation. As described above, ionizing radiation refers to a charged particle beam such as an electron beam. The first radiation may be ultraviolet light for which the first ionizing radiation curable resin has a small absorption coefficient. The wavelength of the ultraviolet light with which the first coating film is irradiated is preferably more than 200 nm, more preferably in the range of 230 nm or more and 450 nm or less, and even more preferably in the range of 250 nm or more and 400 nm or less.

When the first coating film is irradiated with ionizing radiation or the ultraviolet light, the curing can proceed generally uniformly across the entire thickness of the first coating film. Therefore, unlike the second coating film described below, the semi-cured first coating film has no asperities on its surface.

The first coating film is preferably irradiated with the first radiation so that the unreacted ratio of the first coating film, that is, the ratio of the number of C=C bonds after irradiation with the first radiation to the number of C=C bonds before irradiation with the first radiation, is in the range of 5% or more and 80% or less, more preferably in the range of 10% or more and 60% or less, and even more preferably in the range of 15% or more and 50% or less.

The first coating film is preferably irradiated with the first radiation so that the integrated light intensity is in the range of 3% or more and 30% or less, more preferably in the range of 5% or more and 25% or less, and even more preferably in the range of 8% or more and 20% or less of the minimum integrated light intensity required to completely cure the first coating film.

In one example, the minimum integrated light intensity required to completely cure the first coating film is in the range of 10 mJ/cm² to 1000 mJ/cm².

The first coating film is preferably irradiated with the first radiation so that the absorbed dose is in the range of 0.2% or more and 50% or less, more preferably in the range of 0.5% or more and 40% or less, and even more preferably in the range of 1% or more and 30% or less of the minimum absorbed dose required to completely cure the first coating film.

In one example, the minimum absorbed dose required to completely cure the first coating film is in the range of 5 kGy or more and 200 kGy or less.

As described above, the first ionizing radiation curable resin contains a methacrylate in addition to an acrylate. The methacrylate slows down the rate of the crosslinking reaction cause by exposure to the first radiation, widening the process window in which the desired state of cure can be achieved.

Next, a second coating film made using a coating liquid for the second gloss-adjustment layer is formed on the semi-cured first coating film. The second coating film is formed so as to partially cover the upper surface of the first coating film. Specifically, the second coating film is formed so as to face the patterned ink layer 4 with the first coating film sandwiched therebetween. The second coating film can be formed by various printing methods, such as gravure printing, offset printing, screen printing, electrostatic printing, and ink-jet printing. Of these, gravure printing is preferred.

The coating liquid for the second gloss-adjustment layer contains the above-described second ionizing radiation curable resin. As described above, an example of the second ionizing radiation curable resin is acrylate. Another example of the second ionizing radiation curable resin is a second mixture of acrylate and methacrylate. The proportion of the number of moles of methacryloyl groups to the sum of the number of moles of acryloyl groups and the number of moles of methacryloyl groups in the second mixture is smaller than that in the first mixture.

The coating liquid for the second gloss-adjustment layer may further contain one or more other components, for example, the above-described particles, solvents, and additives for improving the functionality of the final product, such as an antibacterial agent and an antifungal agent. The coating liquid for the second gloss-adjustment layer may further contain another additive such as an ultraviolet absorber or a light stabilizer. Examples of ultraviolet absorbers include benzotriazole-based ultraviolet absorbers, benzoate-based ultraviolet absorbers, benzophenone-based ultraviolet absorbers, and triazine-based ultraviolet absorbers. Examples of light stabilizers include hindered amine-based light stabilizers.

Next, the first and second coating films are irradiated with ionizing radiation or ultraviolet light to completely cure them. For example, the second and third irradiation steps described below are carried out sequentially.

In the second step, the second coating film is irradiated with a second radiation. The second radiation is light having a wavelength of 200 nm or less.

The second ionizing radiation curable resin contained in the coating liquid for the second gloss-adjustment layer has a large absorption coefficient for the second radiation. Therefore, the second radiation incident on the second coating film can only reach several tens to several hundreds of nm beneath the outermost surface of the coating film. Therefore, in the second irradiation step, the crosslinking reaction proceeds in the surface region of the second coating film to form an extremely thin cured film, while in the other regions the crosslinking reaction does not proceed and the other regions remain uncured.

The second coating film after the second irradiation step has wrinkles on its surface corresponding to the ridge portions 6B. The present inventors consider that a reason why wrinkles are formed on the coating surface in the second irradiation step is as follows.

As described above, the second radiation incident on the second coating film can only reach several tens to several hundreds of nm beneath the outermost surface of the coating film. In other words, the crosslinking reaction of the second ionizing radiation curable resin occurs only on the surface of the second coating film, and the regions that are more than tens to hundreds of nm away from the outermost surface are uncured and contain highly fluid molecules. Such highly fluid molecules cause the cured film to swell and thereby increase the volume of the cured film. The cured film buckles due to the in-plane compressive stress generated by the increase in volume in the in-plane direction, forming wrinkles on the surface of the second coating film.

Note that, in the second irradiation step, the surface of the portion of the first coating film that is not covered by the second coating film may also be irradiated with the second radiation. However, since the first coating film is semi-cured, the flow of molecules is unlikely to occur within the film. Therefore, no wrinkles are formed on the surface of the exposed portion of the first coating film.

The second radiation does not reach a portion of the first coating film that is covered with the second coating film. Therefore, no crosslinking reaction is caused in this portion by irradiation with the second radiation.

The second irradiation light can be extracted from excimer vacuum ultra violet (VUV) light. The excimer VUV light can be produced from a noble gas lamp or noble gas halide compound lamp. When electrons having high energy are externally applied to a lamp in which a noble gas or noble gas halide compound is sealed, a large quantity of discharge plasma (dielectric barrier discharges) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of the excimer lamp depends on the gas, for example it may be approximately 172 nm (Xe), approximately 126 nm (Ar), approximately 146 nm (Kr), approximately 165 nm (ArBr), and approximately 193 nm (ArF).

Considering the magnitude of photon energy to be obtained or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

The second irradiation step is performed in an atmosphere having a low oxygen concentration. Oxygen has a large absorption coefficient for light of 200 nm or less. Therefore, the second irradiation step is preferably performed, for example, in a nitrogen gas atmosphere. The oxygen concentration in the gas phase in the second irradiation step, that is, the residual oxygen concentration in the reaction atmosphere, is preferably 2000 ppm or less, and more preferably 1000 ppm or less.

The oxygen in the atmosphere inhibits radical polymerization. Therefore, the residual oxygen concentration in the reaction atmosphere affects the formation of wrinkles on the surface of the second coating film. Therefore, when the residual oxygen concentration in the reaction atmosphere is changed, the surface properties of the second gloss-adjustment layer 6 may also change.

The integrated light intensity of the second radiation is preferably in the range of 0.5 mJ/cm² or more and 200 mJ/cm² or less, more preferably in the range of 1 mJ/cm² or more and 100 mJ/cm² or less, even more preferably in the range of 3 mJ/cm² or more and 50 mJ/cm² or less, and most preferably in the range of 5 mJ/cm² or more and 30 mJ/cm² or less. If the integrated light intensity is reduced, the expansion of the cured film in the in-plane direction decreases. If the integrated light intensity is increased, the surface condition of the second coating film deteriorates.

In the third step, the second coating film is irradiated with a third radiation. The third radiation is ionizing radiation, or ultraviolet light having a longer wavelength than the light emitted in the second irradiation step. Light mentioned above for the first radiation can be used as the third radiation.

In the third irradiation step, the crosslinking reaction proceeds in the first and second coating films across their entire thickness. At the start of the third irradiation step, the first coating film is in a semi-cured state. Therefore, a crosslinking reaction may also occur between the molecules in the first coating film and the molecules in the second coating film in areas where the first and second coating films are in contact. This realizes a high adhesion between the first and second gloss-adjustment layers 5 and 6.

The integrated light intensity of the third radiation is preferably in the range of 10 mJ/cm² or more and 500 mJ/cm² or less, more preferably in the range of 50 mJ/cm² or more and 400 mJ/cm² or less, and even more preferably in the range of 100 mJ/cm² or more and 300 mJ/cm² or less.

The irradiation with the third radiation is preferably performed so that the absorbed dose is in the range of 5 kGy to 200 kGy, more preferably in the range of 10 kGy to 150 kGy, and even more preferably in the range of 15 kGy to 100 kGy.

If a layer having sufficient strength cannot be obtained by irradiation with only a single type of radiation, the type of the third radiation may be changed during the third irradiation step. For example, ionizing radiation may be emitted first, and then ultraviolet light having a longer wavelength than the light emitted in the second irradiation step may be emitted. Alternatively, ultraviolet light having a longer wavelength than the light emitted in the second irradiation step may be emitted first, and then ionizing radiation may be emitted. Alternatively, ultraviolet light having a longer wavelength than the light emitted in the second irradiation step may be emitted first, and then ultraviolet light having an even longer wavelength may be emitted.

The decorative sheet 1 is thus obtained. In the decorative sheet 1 obtained by this method, there is no interface between the core portion 6A and the ridge portions 6B, and they are formed integrally.

### <3> Effects

The above-described decorative sheet 1 includes the first gloss-adjustment layer 5 and the second gloss-adjustment layer 6 partially covering the first gloss-adjustment layer 5. The first and second gloss-adjustment layers 5 and 6 have different specular gloss GS (60°) values. Here, the second gloss-adjustment layer 6 has a lower specular gloss GS (60°) than the first gloss-adjustment layer 5. In particular, when the second gloss-adjustment layer 6 has the surface properties described above, the difference between the specular gloss GS (60°) values of the first and second gloss-adjustment layers 5 and 6 can be increased. These differences in glossiness can contribute to the expression of a three-dimensional rough texture.

Further, in the decorative sheet 1, the second gloss-adjustment layer 6 is identical in shape and position to the patterned ink layer 4. Therefore, the decorative sheet 1 can express a three-dimensional rough texture with the areas corresponding to the patterned ink layer 4 serving as protrusions and the other areas serving as recesses. This allows the decorative sheet 1 to express, for example, a luxurious design that resembles natural wood, natural stone, and the like by appropriately selecting the color of the solid ink layer 3 and the color of the patterned ink layer 4.

Further, in the decorative sheet 1, the first gloss-adjustment layer 5 contains only a cured product of the first ionizing radiation curable resin as the cured resin, and the first ionizing radiation curable resin is the first mixture of acrylate and methacrylate. The acrylate contributes to improving scratch resistance, and the methacrylate contributes to improving adhesion between the first and second gloss-adjustment layers 5 and 6. Therefore, the decorative sheet 1 has a good scratch resistance and adhesion between the gloss-adjustment layers.

The uneven structure including the ridge portions 6B formed on the upper surface of the second gloss-adjustment layer 6 by the above-mentioned method is finer than an uneven structure formed by mechanical processing such as embossing. Since the decorative sheet 1 has a fine uneven structure on the upper surface of the second gloss-adjustment layer 6, it has a matte finish and good fingerprint resistance.

### <4> Modifications

The decorative sheet 1 can be modified in various manners.

For example, the second gloss-adjustment layer 6 may be identical in shape and position to the part of the solid ink layer 3 that is not covered by the patterned ink layer 4. A decorative sheet 1 modified in this manner can express a three-dimensional rough texture with the areas corresponding to the patterned ink layer 4 serving as recesses and the other areas serving as protrusions.

In the decorative sheet 1 described above, the protrusions provided on the upper surface of the second gloss-adjustment layer 6 are ridge-shaped. These protrusions do not need to be ridge-shaped. For example, each of these protrusions may be a portion of a particle.

In the decorative sheet 1 described above, the area of the upper surface of the first gloss-adjustment layer 5 that is not covered by the second gloss-adjustment layer 6 is flat. An uneven structure may be provided in this area as long as the above-mentioned relationship of glossiness is maintained. This uneven structure may be a structure similar to that described above for the ridge portions 6B, or may be a structure in which a plurality of protrusions that are each a portion of a particle are arranged.

### Examples

The following description discusses examples of the present invention. The "particle size" in the following is the above-mentioned "mean particle size (D50)".

### <Example 1>

The decorative sheet 1 described with reference to Figs. 1 to 4 was produced as follows. First, impregnated paper having a basis weight of 50 g/m² (GFR-506, manufactured by Kohjin Co., Ltd.) was prepared as the primary film layer 2. On one surface of the primary film layer 2, the solid ink layer 3 and the patterned ink layer 4 were formed in this order using oily nitrocellulose resin gravure printing inks (various colors of PCNT (PCRNT) manufactured by Toyo Ink Co., Ltd.). The design pattern of the patterned ink layer 4 was a wood grain pattern.

Next, a coating liquid for the first gloss-adjustment layer having the following composition was applied on the solid ink layer 3 and the patterned ink layer 4. The coating liquid for the first gloss-adjustment layer was applied so that the first gloss-adjustment layer 5 would have a thickness of 5 µm.

### (Coating Liquid for First Gloss-adjustment Layer)

- Ionizing radiation curable resin R1
   Type: Trimethylolpropane EO-modified triacrylate (3 moles of EO added)
   Product name: Miramer M3130 (manufactured by Miwon)
   Formulation: 50 parts by mass
- Ionizing radiation curable resin R2
   Type: Methoxypolyethylene glycol (400) methacrylate
   Product name: NK Ester M-90G (manufactured by SHIN-NAKAMURA CHEMICAL Co., Ltd.)
   Formulation: 50 parts by mass
- Particles
   Product name: SYLYSIA 250N (manufactured by Fuji Silysia Chemical Ltd.)
   Particle size: 5 µm
   Formulation: 15 parts by mass

Subsequently, the first irradiation step was carried out. Specifically, the first coating film made using the coating liquid for the first gloss-adjustment layer was irradiated with an electron beam as ionizing radiation so that the absorbed dose of the first coating film was 10 kGy. This caused the first coating film to be semi-cured.

Next, a coating liquid for the second gloss-adjustment layer having the following composition was printed on part of the first coating film corresponding to the patterned ink layer 4. The coating liquid for the second gloss-adjustment layer was printed so that the second gloss-adjustment layer 6 would have a thickness of 5 µm.

### (Coating Liquid for Second Gloss-adjustment Layer)

- Ionizing radiation curable resin
   Type: Trimethylolpropane EO-modified triacrylate (6 moles of EO added)
   Product name: Miramer M3160 (manufactured by Miwon)
   Formulation: 100 parts by mass
- Particles
   Product name: SYLYSIA 250N (manufactured by Fuji Silysia Chemical Ltd.)
   Particle size: 5 µm
   Formulation: 0.5 parts by mass

Subsequently, the second irradiation step was carried out. Specifically, under atmospheric pressure and in a nitrogen gas atmosphere with an oxygen concentration of 500 ppm, the surfaces of the first coating film and the second coating film made using the coating liquid for the second gloss-adjustment layer was irradiated with ultraviolet light having a wavelength of 172 nm using a Xe excimer lamp so that the integrated light intensity would be 50 mJ/cm². This created wrinkles on the surface of the second coating film.

Subsequently, the third irradiation step was carried out. Specifically, the first and second coating films were irradiated with 100 kGy of ionizing radiation to entirely and completely cure them and thereby form the first and second gloss-adjustment layers 5 and 6.

The decorative sheet 1 was thus obtained.

### <Example 2>

The decorative sheet 1 described with reference to Figs. 1 to 4 was produced in the same manner as in Example 1, except that the coating liquid for the first gloss-adjustment layer contained 80 parts by mass of the ionizing radiation curable resin R1 and 20 parts by mass of the ionizing radiation curable resin R2.

### <Example 3>

The decorative sheet 1 described with reference to Figs. 1 to 4 was produced in the same manner as in Example 1, except that 90 parts by mass of the ionizing radiation curable resin R1 and 10 parts by mass of the ionizing radiation curable resin R2 were contained in the coating liquid for the first gloss-adjustment layer.

### <Example 4>

The decorative sheet 1 described with reference to Figs. 1 to 4 was produced in the same manner as in Example 1, except that the following resin was used as the ionizing radiation curable resin R2, and the coating liquid for the first gloss-adjustment layer contained 90 parts by mass of the ionizing radiation curable resin R1 and 10 parts by mass of the ionizing radiation curable resin R2.
- Ionizing radiation curable resin R2
   Type: Isobornyl methacrylate
   Product name: Light Ester IB-X (manufactured by Kyoeisha Chemical Co., Ltd.)

### <Example 5>

The decorative sheet 1 described with reference to Figs. 1 to 4 was produced in the same manner as in Example 1, except that the following resin was used as the ionizing radiation curable resin R2.
- Ionizing radiation curable resin R2
   Type: EO-modified bisphenol A dimethacrylate (10 moles of EO added)
   Product name: NK Ester BPE-500 (manufactured by SHIN-NAKAMURA CHEMICAL Co., Ltd.)

### <Example 6>

The decorative sheet 1 described with reference to Figs. 1 to 4 was produced in the same manner as in Example 1, except that the following resin was used as the ionizing radiation curable resin R2, and the coating liquid for the first gloss-adjustment layer contained 80 parts by mass of the ionizing radiation curable resin R1 and 20 parts by mass of the ionizing radiation curable resin R2.
- Ionizing radiation curable resin R2
   Type: EO-modified bisphenol A dimethacrylate (10 moles of EO added)
   Product name: NK Ester BPE-500 (manufactured by SHIN-NAKAMURA CHEMICAL Co., Ltd.)

### <Example 7>

The decorative sheet 1 described with reference to Figs. 1 to 4 was produced in the same manner as in Example 1, except that the following resin was used as the ionizing radiation curable resin R2, and the coating liquid for the first gloss-adjustment layer contained 90 parts by mass of the ionizing radiation curable resin R1 and 10 parts by mass of the ionizing radiation curable resin R2.
- Ionizing radiation curable resin R2
   Type: EO-modified bisphenol A dimethacrylate (10 moles of EO added)
   Product name: NK Ester BPE-500 (manufactured by SHIN-NAKAMURA CHEMICAL Co., Ltd.)

### <Example 8>

The decorative sheet 1 described with reference to Figs. 1 to 4 was produced in the same manner as in Example 1, except that the following resin was used as the ionizing radiation curable resin R2, and the coating liquid for the first gloss-adjustment layer contained 80 parts by mass of the ionizing radiation curable resin R1 and 20 parts by mass of the ionizing radiation curable resin R2.
- Ionizing radiation curable resin R2
   Type: Polyethylene glycol (200) dimethacrylate
   Product name: NK Ester 4G (manufactured by SHIN-NAKAMURA CHEMICAL Co., Ltd.)

### <Example 9>

The decorative sheet 1 described with reference to Figs. 1 to 4 was produced in the same manner as in Example 1, except that the following resin was used as the ionizing radiation curable resin R2.
- Ionizing radiation curable resin R2
   Type: Trimethylolpropane EO-modified trimethacrylate (3 moles of EO added)
   Product name: NK Ester TMPT-3EO (manufactured by SHIN-NAKAMURA CHEMICAL Co., Ltd.)

### <Example 10>

The decorative sheet 1 described with reference to Figs. 1 to 4 was produced in the same manner as in Example 1, except that the following resin was used as the ionizing radiation curable resin R2.
- Ionizing radiation curable resin R2
   Type: Trimethylolpropane PO-modified trimethacrylate (3 moles of PO added)
   Product name: NK Ester TMPT-3PO (manufactured by SHIN-NAKAMURA CHEMICAL Co., Ltd.)

### <Example 11>

The decorative sheet 1 described with reference to Figs. 1 to 4 was produced in the same manner as in Example 1, except that the coating liquid for the second gloss-adjustment layer contained 20 parts by mass of particles.

### <Example 12>

The decorative sheet 1 described with reference to Figs. 1 to 4 was produced in the same manner as in Example 1 except for the following modification.

That is, in this example, the following resin was used as the ionizing radiation curable resin in the coating liquid for the second gloss-adjustment layer.

- Ionizing radiation curable resin
   Type: Trimethylolpropane EO-modified triacrylate (3 moles of EO added)
   Product name: Miramer M3130 (manufactured by Miwon)

In the second irradiation step, under atmospheric pressure and in a nitrogen gas atmosphere with an oxygen concentration of 200 ppm, the surfaces of the first coating film and the second coating film made using the coating liquid for the second gloss-adjustment layer was irradiated with ultraviolet light having a wavelength of 172 nm using a Xe excimer lamp so that the integrated light intensity would be 100 mJ/cm².

### <Example 13>

The decorative sheet 1 described with reference to Figs. 1 to 4 was produced in the same manner as in Example 1, except that the following resin was used as the ionizing radiation curable resin in the coating liquid for the second gloss-adjustment layer.
- Ionizing radiation curable resin
   Type: Trimethylolpropane EO-modified triacrylate (15 moles of EO added)
   Product name: SR9035 (manufactured by Sartomer)

### <Example 14>

The decorative sheet 1 described with reference to Figs. 1 to 4 was produced in the same manner as in Example 1, except that the following resin was used as the ionizing radiation curable resin in the coating liquid for the second gloss-adjustment layer.
- Ionizing radiation curable resin
   Type: Ethylene glycol diacrylate (9 moles of EO added)
   Product name: Light Acrylate 9EG-A (manufactured by Kyoeisha Chemical Co., Ltd.)

### <Example 15>

The decorative sheet 1 described with reference to Figs. 1 to 4 was produced in the same manner as in Example 1 except for the following modification.

That is, in this example, the following resin was used as the ionizing radiation curable resin in the coating liquid for the second gloss-adjustment layer.
- Ionizing radiation curable resin
   Type: Ethoxylated pentaerythritol tetraacrylate (35 moles of EO added)
   Product name: NK Ester ATM-35E (manufactured by SHIN-NAKAMURA CHEMICAL Co., Ltd.)

In the second irradiation step, under atmospheric pressure and in a nitrogen gas atmosphere with an oxygen concentration of 200 ppm, the surfaces of the first coating film and the second coating film made using the coating liquid for the second gloss-adjustment layer was irradiated with ultraviolet light having a wavelength of 172 nm using a Xe excimer lamp so that the integrated light intensity would be 50 mJ/cm².

### <Example 16>

The decorative sheet 1 described with reference to Figs. 1 to 4 was produced in the same manner as in Example 1 except for the following modification.

That is, in this example, the following resin was used as the ionizing radiation curable resin in the coating liquid for the second gloss-adjustment layer.
- Ionizing radiation curable resin
   Type: Ethoxylated dipentaerythritol hexaacrylate (12 moles of EO added)
   Product name: NK Ester A-DPH-12E (manufactured by SHIN-NAKAMURA CHEMICAL Co., Ltd.)

In the second irradiation step, under atmospheric pressure and in a nitrogen gas atmosphere with an oxygen concentration of 100 ppm, the surfaces of the first coating film and the second coating film made using the coating liquid for the second gloss-adjustment layer was irradiated with ultraviolet light having a wavelength of 172 nm using a Xe excimer lamp so that the integrated light intensity would be 150 mJ/cm².

### <Example 17>

The decorative sheet 1 described with reference to Figs. 1 to 4 was produced in the same manner as in Example 1, except that the coating liquid for the second gloss-adjustment layer was printed so that the second gloss-adjustment layer 6 would have a thickness of 2 µm.

### <Example 18>

The decorative sheet 1 described with reference to Figs. 1 to 4 was produced in the same manner as in Example 1, except that the coating liquid for the second gloss-adjustment layer was printed so that the second gloss-adjustment layer 6 would have a thickness of 20 µm.

### <Example 19>

The decorative sheet 1 described with reference to Figs. 1 to 4 was produced in the same manner as in Example 1 except for the following modifications. That is, in this example, the coating liquid for the second gloss-adjustment layer contained no particles. In addition, the coating liquid for the second gloss-adjustment layer was printed so that the second gloss-adjustment layer 6 would have a thickness of 3 µm.

### <Example 20>

The decorative sheet 1 described with reference to Figs. 1 to 4 was produced in the same manner as in Example 1, except that the coating liquid for the second gloss-adjustment layer contained 10 parts by mass of particles.

### <Example 21>

The decorative sheet 1 described with reference to Figs. 1 to 4 was produced in the same manner as in Example 1 except for the following modifications. That is, in this example, the coating liquid for the first gloss-adjustment layer contained 10 parts by mass of particles. In addition, the following coating liquid for the second gloss-adjustment layer was used in this example.

### (Coating Liquid for Second Gloss-adjustment Layer)

- Ionizing radiation curable resin 1
   Type: Trimethylolpropane EO-modified triacrylate (6 moles of EO added)
   Product name: Miramer M3160 (manufactured by Miwon)
   Formulation: 60 parts by mass
- Ionizing radiation curable resin 2
   Type: Dipentaerythritol hexaacrylate
   Product name: Miramer M600 (manufactured by Miwon)
   Formulation: 40 parts by mass
- Particles
   Product name: SYLYSIA 250N (manufactured by Fuji Silysia Chemical Ltd.)
   Particle size: 5 µm
   Formulation: 0.5 parts by mass

### <Example 22>

The decorative sheet 1 described with reference to Figs. 1 to 4 was produced in the same manner as in Example 1 except for the following modifications. That is, in this example, the coating liquid for the first gloss-adjustment layer contained 5 parts by mass of particles. In addition, the following coating liquid for the second gloss-adjustment layer was used in this example.

### (Coating Liquid for Second Gloss-adjustment Layer)

- Ionizing radiation curable resin 1
   Type: Trimethylolpropane EO-modified triacrylate (6 moles of EO added)
   Product name: Miramer M3160 (manufactured by Miwon)
   Formulation: 40 parts by mass
- Ionizing radiation curable resin 2
   Type: Dipentaerythritol hexaacrylate
   Product name: Miramer M600 (manufactured by Miwon)
   Formulation: 60 parts by mass
- Particles
   Product name: SYLYSIA 250N (manufactured by Fuji Silysia Chemical Ltd.)
   Particle size: 5 µm
   Formulation: 0.5 parts by mass

### <Example 23>

The decorative sheet 1 described with reference to Figs. 1 to 4 was produced in the same manner as in Example 1 except for the following modifications. That is, in this example, the coating liquid for the first gloss-adjustment layer contained 10 parts by mass of particles. In addition, the following coating liquid for the second gloss-adjustment layer was used in this example. The coating liquid for the second gloss-adjustment layer was printed so that the second gloss-adjustment layer 6 would have a thickness of 14 µm.

### (Coating Liquid for Second Gloss-adjustment Layer)

- Ionizing radiation curable resin 1
   Type: Trimethylolpropane EO-modified triacrylate (6 moles of EO added)
   Product name: Miramer M3160 (manufactured by Miwon)
   Formulation: 40 parts by mass
- Ionizing radiation curable resin 2
   Type: Dipentaerythritol hexaacrylate
   Product name: Miramer M600 (manufactured by Miwon)
   Formulation: 60 parts by mass
- Particles
   Product name: SYLYSIA 250N (manufactured by Fuji Silysia Chemical Ltd.)
   Particle size: 5 µm
   Formulation: 0.5 parts by mass

### <Comparative Example 1>

A decorative sheet similar to that described with reference to Figs. 1 to 4 was produced in the same manner as in Example 1, except that the coating liquid for the first gloss-adjustment layer did not contain the ionizing radiation curable resin R2.

### <Comparative Example 2>

A decorative sheet similar to that described with reference to Figs. 1 to 4 was produced in the same manner as in Example 1, except that the coating liquid for the first gloss-adjustment layer did not contain the ionizing radiation curable resin R1.

### <Evaluation>

Each of the above decorative sheets was evaluated as follows. Samples rated as "AAA", "AA", or "A" were deemed acceptable because they would not pose problems in actual use.

### (1) Thickness of Gloss-adjustment Layer

The thickness of the second gloss-adjustment layer was measured in the same manner as described above.

Specifically, the decorative sheet was embedded in a resin such as a cold-curing epoxy resin or a UV curable resin, and the resin was allowed to fully cure. Then, this was cut so that a cross section of the decorative sheet was exposed. The cross section was mechanically polished to obtain a measurement surface.

After that, the cross section of the second gloss-adjustment layer was imaged using a scanning electron microscope SIGMA 500, manufactured by Carl Zeiss Microscopy GmbH. The imaging was performed with an acceleration voltage of 0.5 keV (low acceleration voltage), in the SE2 imaging mode, and at 2000x magnification. The measurement samples were not subjected to sputtering.

Next, from this cross-sectional image, the dimension of the second gloss-adjustment layer in the width direction of the ridge portions, and the area of the cross section of the second gloss-adjustment layer were obtained. The thickness of the second gloss-adjustment layer was calculated by dividing this area by the dimension. The thickness thus obtained was equal to the thickness of the coating film made using the coating liquid for the second gloss-adjustment layer.

The thickness of the first gloss-adjustment layer was measured in the same manner as described above.

### (2) Glossiness

Specular gloss GS (60°) was measured as the glossiness using a micro-gloss 60° xs (manufactured by BYK). The "60° gloss value" in the following Tables 1 to 5 represents this specular gloss GS (60°).

### (3) Adhesion

The adhesion of the second gloss-adjustment layer to the first gloss-adjustment layer was evaluated by the cross-cut test specified in JIS K 5400 (discontinued). Here, cuts extending deeper than the interface between the first and second gloss-adjustment layers were formed in a lattice pattern at intervals of 1 mm on the surface of the decorative sheet. This resulted in 100 squares arranged in a grid pattern. Next, an adhesive tape was applied to the surface of the decorative sheet, and then removed from the decorative sheet. The number of squares remaining on the decorative sheet was then counted, and the adhesion was rated by comparing this number with the following criteria.

AAA: The number of remaining squares was 100.
AA: The number of remaining squares was in the range of 95 to 99.
A: The number of remaining squares was in the range of 90 to 94.
B: The number of remaining squares was 89 or less.

### (4) Scratch Resistance

Each decorative sheet was attached to a wood substrate B using a urethane adhesive. After that, a steel wool rubbing test was carried out to evaluate scratch resistance. Specifically, with a load of 100 g imposed, steel wool was reciprocated 20 times on the decorative sheet for rubbing, and scratches and gloss changes caused on the surface of the sheet were visually examined.

The evaluation criteria were as follows.
AAA: No scratches or gloss changes were observed on the surface.
AA: Slight scratches or gloss changes were observed on part of the surface.
A: Slight scratches or gloss changes were observed on the surface.
B: Significant scratches or gloss changes were observed on the surface.

### (5) Stain Resistance

To evaluate the stain resistance, the stain A test specified in the Japanese Agricultural Standards (JAS) was carried out. That is, a line having a width of 10 mm was drawn on the surface protective layer of each decorative sheet using blue ink, black quick-drying ink, and red crayon, and the sheets were left to stand for 4 hours. Then, the lines drawn with the blue ink, black quick-drying ink, and red crayon were wiped off with a cloth wetted with ethanol.

The evaluation criteria were as follows.
AAA: Colored lines could all be easily wiped off.
AA: Part of colored lines could be wiped off but a small part of them remained as slight stains.
A: Part of colored lines could be wiped off but part of them remained as stains.
B: None of colored lines could be wiped off.

The ratings are shown in Tables 1 to 5. Note that, in Tables 1 to 5, "proportion of the number of moles of methacryloyl groups" refers to the proportion of the number of moles of methacryloyl groups to the sum of the number of moles of acryloyl groups and the number of moles of methacryloyl groups.

**[Table 1]**

| | | | Ex. 1 | Ex. 2 | Ex. 3 | Ex. 4 | Ex. 5 |
|---|---|---|---|---|---|---|---|
| First gloss-adjustment layer | Thickness (µm) | | 5 | 5 | 5 | 5 | 5 |
| | Acrylate | No. of functional groups | 3 | 3 | 3 | 3 | 3 |
| | | Formulation (parts by mass) | 50 | 80 | 90 | 90 | 50 |
| | Methacrylate | No. of functional groups | 1 | 1 | 1 | 1 | 2 |
| | | Formulation (parts by mass) | 50 | 20 | 10 | 10 | 50 |
| | Proportion of no. of moles of methacryloyl groups | | 22% | 7% | 3% | 7% | 26% |
| | Additive | Particle size (µm) | 5 | 5 | 5 | 5 | 5 |
| | | Amount added | 15 | 15 | 15 | 15 | 15 |
| Second gloss-adjustment layer | Surface profile | | Ridges | Ridges | Ridges | Ridges | Ridges |
| | RSm/Ra | | 120 | 120 | 120 | 120 | 120 |
| | Thickness (µm) | | 5 | 5 | 5 | 5 | 5 |
| | Acrylic resin 1 | Ratio (parts by mass) | 100 | 100 | 100 | 100 | 100 |
| | | No. of functional groups | 3 | 3 | 3 | 3 | 3 |
| | | No. of repetitions | 6 | 6 | 6 | 6 | 6 |
| | Acrylic resin 2 | Ratio (parts by mass) | - | - | - | - | - |
| | | No. of functional groups | - | - | - | - | - |
| | | No. of repetitions | - | - | - | - | - |
| | Additive | Particle size (µm) | 5 | 5 | 5 | 5 | 5 |
| | | Amount added (parts by mass) | 0.5 | 0.5 | 0.5 | 0.5 | 0.5 |
| 60° gloss value (%) | | First gloss-adjustment layer | 10.0 | 10.0 | 10.0 | 10.0 | 10.0 |
| | | Second gloss-adjustment layer | 3.0 | 3.0 | 3.0 | 3.0 | 3.0 |
| Adhesion test | | Cross-cut test | AAA | AAA | AA | AA | AAA |
| Scratch resistance | | Steel | A | AA | AAA | AAA | AA |
| Stain resistance | | Stain A | A | AA | AAA | AAA | AA |

**[Table 2]**

| | | | Ex. 6 | Ex. 7 | Ex. 8 | Ex. 9 | Ex. 10 |
|---|---|---|---|---|---|---|---|
| First gloss- adjustment layer | Thickness (µm) | | 5 | 5 | 5 | 5 | 5 |
| | Acrylate | No. of functional groups | 3 | 3 | 3 | 3 | 3 |
| | | Formulation (parts by mass) | 80 | 90 | 80 | 50 | 50 |
| | Methacrylate | No. of functional groups | 2 | 2 | 2 | 3 | 3 |
| | | Formulation (parts by mass) | 20 | 10 | 20 | 50 | 50 |
| | Proportion of no. of moles of methacryloyl groups | | 8% | 4% | 19% | 49% | 47% |
| | Additive | Particle size (µm) | 5 | 5 | 5 | 5 | 5 |
| | | Amount added | 15 | 15 | 15 | 15 | 15 |
| Second gloss-adjustment layer | Surface profile | | Ridges | Ridges | Ridges | Ridges | Ridges |
| | RSm/Ra | | 120 | 120 | 120 | 120 | 120 |
| | Thickness (µm) | | 5 | 5 | 5 | 5 | 5 |
| | Acrylic resin 1 | Ratio (parts by mass) | 100 | 100 | 100 | 100 | 100 |
| | | No. of functional groups | 3 | 3 | 3 | 3 | 3 |
| | | No. of repetitions | 6 | 6 | 6 | 6 | 6 |
| | Acrylic resin 2 | Ratio (parts by mass) | - | - | - | - | - |
| | | No. of functional groups | - | - | - | - | - |
| | | No. of repetitions | - | - | - | - | - |
| | Additive | Particle size (µm) | 5 | 5 | 5 | 5 | 5 |
| | | Amount added (parts by mass) | 0.5 | 0.5 | 0.5 | 0.5 | 0.5 |
| 60° gloss value (%) | | First gloss-adjustment layer | 10.0 | 10.0 | 10.0 | 10.0 | 10.0 |
| | | Second gloss-adjustment layer | 3.0 | 3.0 | 3.0 | 3.0 | 3.0 |
| Adhesion test | | Cross-cut test | AA | A | AA | A | A |
| Scratch resistance | | Steel | AAA | AAA | AAA | AAA | AAA |
| Stain resistance | | Stain A | AAA | AAA | AAA | AAA | AAA |

**[Table 3]**

| | | | Ex. 11 | Ex. 12 | Ex. 13 | Ex. 14 | Ex. 15 |
|---|---|---|---|---|---|---|---|
| First gloss-adjustment layer | Thickness (µm) | | 5 | 5 | 5 | 5 | 5 |
| | Acrylate | No. of functional groups | 3 | 3 | 3 | 3 | 3 |
| | | Formulation (parts by mass) | 50 | 50 | 50 | 50 | 50 |
| | Methacrylate | No. of functional groups | 1 | 1 | 1 | 1 | 1 |
| | | Formulation (parts by mass) | 50 | 50 | 50 | 50 | 50 |
| | Proportion of no. of moles of methacryloyl groups | | 22% | 22% | 22% | 22% | 22% |
| | Additive | Particle size (µm) | 5 | 5 | 5 | 5 | 5 |
| | | Amount added | 15 | 15 | 15 | 15 | 15 |
| Second gloss-adjustment layer | Surface profile | | Asperities formed by particles | Ridges | Ridges | Ridges | Ridges |
| | RSm/Ra | | 400 | 180 | 100 | 120 | 120 |
| | Thickness (µm) | | 5 | 5 | 5 | 5 | 5 |
| | Acrylic resin 1 | Ratio (parts by mass) | 100 | 100 | 100 | 100 | 100 |
| | | No. of functional groups | 3 | 3 | 3 | 2 | 4 |
| | | No. of repetitions | 6 | 3 | 15 | 9 | 35 |
| | Acrylic resin 2 | Ratio (parts by mass) | - | - | - | - | - |
| | | No. of functional groups | - | - | - | - | - |
| | | No. of repetitions | - | - | - | - | - |
| | Additive | Particle size (µm) | 5 | 5 | 5 | 5 | 5 |
| | | Amount added (parts by mass) | 20 | 0.5 | 0.5 | 0.5 | 0.5 |
| 60° gloss value (%) | | First gloss-adjustment layer | 10.0 | 10.0 | 10.0 | 10.0 | 10.0 |
| | | Second gloss-adjustment layer | 6.8 | 4.3 | 1.8 | 3.1 | 2.8 |
| Adhesion test | | Cross-cut test | AAA | AAA | AAA | AAA | AAA |
| Scratch resistance | | Steel | A | AA | A | A | AA |
| Stain resistance | | Stain A | A | AA | A | A | AA |

**[Table 4]**

| | | | Ex. 16 | Ex. 17 | Ex. 18 | Ex. 19 | Ex. 20 |
|---|---|---|---|---|---|---|---|
| First gloss-adjustment layer | Thickness (µm) | | 5 | 5 | 5 | 5 | 5 |
| | Acrylate | No. of functional groups | 3 | 3 | 3 | 3 | 3 |
| | | Formulation (parts by mass) | 50 | 50 | 50 | 50 | 50 |
| | Methacrylate | No. of functional groups | 1 | 1 | 1 | 1 | 1 |
| | | Formulation (parts by mass) | 50 | 50 | 50 | 50 | 50 |
| | Proportion of no. of moles of methacryloyl groups | | 22% | 22% | 22% | 22% | 22% |
| | Additive | Particle size (µm) | 5 | 5 | 5 | 5 | 5 |
| | | Amount added | 15 | 15 | 15 | 15 | 15 |
| Second gloss-adjustment layer | Surface profile | | Ridges | Ridges | Ridges | Ridges | Ridges |
| | RSm/Ra | | 280 | 250 | 110 | 490 | 150 |
| | Thickness (µm) | | 5 | 2 | 20 | 3 | 5 |
| | Acrylic resin 1 | Ratio (parts by mass) | 100 | 100 | 100 | 100 | 100 |
| | | No. of functional groups | 6 | 3 | 3 | 3 | 3 |
| | | No. of repetitions | 12 | 6 | 6 | 6 | 6 |
| | Acrylic resin 2 | Ratio (parts by mass) | - | - | - | - | - |
| | | No. of functional groups | - | - | - | - | - |
| | | No. of repetitions | - | - | - | - | - |
| | Additive | Particle size (µm) | 5 | 5 | 5 | N/A | 5 |
| | | Amount added (parts by mass) | 0.5 | 0.5 | 0.5 | - | 10 |
| 60° gloss value (%) | | First gloss-adjustment layer | 10.0 | 10.0 | 10.0 | 10.0 | 10.0 |
| | | Second gloss-adjustment layer | 7.8 | 6.5 | 2.5 | 9.0 | 3.0 |
| Adhesion test | | Cross-cut test | AAA | AAA | AAA | AAA | AAA |
| Scratch resistance | | Steel | AA | A | A | AA | A |
| Stain resistance | | Stain A | AA | A | A | AA | A |

**[Table 5]**

| | | | Ex. 21 | Ex. 22 | Ex. 23 | Comp. Ex. 1 | Comp. Ex. 2 |
|---|---|---|---|---|---|---|---|
| First gloss-adjustment layer | Thickness (µm) | | 5 | 5 | 5 | 5 | 5 |
| | Acrylate | No. of functional groups | 3 | 3 | 3 | 3 | - |
| | | Formulation (parts by mass) | 50 | 50 | 50 | 50 | - |
| | Methacrylate | No. of functional groups | 1 | 1 | 1 | - | 1 |
| | | Formulation (parts by mass) | 50 | 50 | 50 | - | 50 |
| | Proportion of no. of moles of methacryloyl groups | | 22% | 22% | 22% | 0% | 100% |
| | Additive | Particle size (µm) | 5 | 5 | 5 | 5 | 5 |
| | | Amount added | 10 | 5 | 10 | 15 | 15 |
| Second gloss-adjustment layer | Surface profile | | Ridges | Ridges | Ridges | Ridges | Ridges |
| | RSm/Ra | | 490 | 730 | 300 | 120 | 120 |
| | Thickness (µm) | | 5 | 5 | 14 | 5 | 5 |
| | Acrylic resin 1 | Ratio (parts by mass) | 60 | 40 | 40 | 100 | 100 |
| | | No. of functional groups | 3 | 3 | 3 | 3 | 3 |
| | | No. of repetitions | 6 | 6 | 6 | 6 | 6 |
| | Acrylic resin 2 | Ratio (parts by mass) | 40 | 60 | 60 | - | - |
| | | No. of functional groups | 6 | 6 | 6 | - | - |
| | | No. of repetitions | - | - | - | - | - |
| | Additive | Particle size (µm) | 5 | 5 | 5 | 5 | 5 |
| | | Amount added (parts by mass) | 0.5 | 0.5 | 0.5 | 0.5 | 0.5 |
| 60° gloss value (%) | | First gloss-adjustment layer | 15.0 | 20.0 | 15.0 | 8 | 8 |
| | | Second gloss-adjustment layer | 12.0 | 18.0 | 7.2 | 2 | 2 |
| Adhesion test | | Cross-cut test | AA | AA | AAA | B | AAA |
| Scratch resistance | | Steel | AAA | AAA | AA | B | B |
| Stain resistance | | Stain A | AAA | AAA | AA | B | B |

As shown in Tables 1 to 5, the decorative sheets according to Examples 1 to 23 exhibited sufficient performance in all of adhesion, scratch resistance, and stain resistance. In contrast, the sheet according to Comparative Example 1 showed insufficient performance in all of adhesion, scratch resistance, and stain resistance. The sheet according to Comparative Example 2 showed sufficient performance in adhesion, but showed insufficient performance in scratch resistance and stain resistance.

### [Reference Signs List]

- 1: Decorative sheet
- 2: Primary film layer
- 3: Solid ink layer
- 4: Patterned ink layer
- 5: First gloss-adjustment layer
- 6: Second gloss-adjustment layer
- 6A: Core portion
- 6B: Ridge portion
- 11: Decorative material
- B: Substrate
- C: Position
- D: Position

## Claims

1. A decorative sheet comprising a primary film layer and a surface protective layer,
wherein the surface protective layer includes
a first gloss-adjustment layer that is provided on the primary film layer and contains only a cured product of a first ionizing radiation curable resin as a cured resin, the first ionizing radiation curable resin being a first mixture of an acrylate and a methacrylate, and
a second gloss-adjustment layer that partially covers an upper surface of the first gloss-adjustment layer, contains only a cured product of a second ionizing radiation curable resin as a cured resin, and has a lower specular gloss GS (60°) than the first gloss-adjustment layer.

2. The decorative sheet according to claim 1, wherein, in the first ionizing radiation curable resin, a proportion of a number of moles of methacryloyl groups to a sum of a number of moles of acryloyl groups and the number of moles of methacryloyl groups is in a range of 3% or more and 50% or less.

3. The decorative sheet according to claim 1 or 2, wherein the methacrylate is a monofunctional, difunctional or trifunctional methacrylate.

4. The decorative sheet according to any one of claims 1 to 3, wherein the second ionizing radiation curable resin is an acrylate or a second mixture of an acrylate and a methacrylate, and a proportion of a number of moles of methacryloyl groups to a sum of a number of moles of acryloyl groups and the number of moles of methacryloyl groups in the second mixture is smaller than that in the first mixture.

5. The decorative sheet according to any one of claims 1 to 4, wherein the second ionizing radiation curable resin contains a di- or higher functional acrylate having a repeating structure.

6. The decorative sheet according to claim 5, wherein the number of repetitions of the repeating structure is 3 or more.

7. The decorative sheet according to any one of claims 1 to 6, wherein a surface of the second gloss-adjustment layer is provided with an uneven structure including a plurality of ridge portions each protruding in a ridge-like manner.

8. The decorative sheet according to claim 7, wherein the uneven structure has a ratio RSm/Ra of a mean width RSm of roughness profile elements to an arithmetic mean roughness Ra that is in the range of 10 or more and 900 or less.

9. The decorative sheet according to any one of claims 1 to 8, wherein the first and second gloss-adjustment layers each have a thickness in the range of 2 µm or more and 20 µm or less.

10. The decorative sheet according to any one of claims 1 to 9, wherein the second gloss-adjustment layer further contains particles with a mean particle size of 10 µm or less.

11. The decorative sheet according to claim 10, wherein a mass of the particles contained in the second ionizing radiation curable resin is in the range of 0.5 parts by mass or more and 20 parts by mass or less of the particles, relative to 100 parts by mass of the second ionizing radiation curable resin.

12. The decorative sheet according to any one of claims 1 to 11, wherein the first gloss-adjustment layer has a specular gloss GS (60°) of 3 or more, and the second gloss-adjustment layer has a specular gloss GS (60°) of 20 or less.

13. The decorative sheet according to any one of claims 1 to 12, wherein a difference between a specular gloss GS (60°) of the first gloss-adjustment layer and a specular gloss GS (60°) of the second gloss-adjustment layer is 1 or more.

14. A decorative material comprising the decorative sheet according to any one of claims 1 to 13, and a substrate to which the decorative sheet is attached.

15. A method of manufacturing a decorative sheet, the method including:
forming a first coating film on a primary film layer, the first coating film containing only a first ionizing radiation curable resin as a resin, the first ionizing radiation curable resin being a first mixture of an acrylate and a methacrylate;
performing a first irradiation step in which the first coating film is irradiated with an ionizing radiation or ultraviolet light to semi-cure the first coating film;
forming a second coating film on the semi-cured first coating film so as to partially cover an upper surface of the first coating film, the second coating film containing only a second ionizing radiation curable resin as a resin; and
irradiating the first and second coating films with an ionizing radiation or ultraviolet light to completely cure the first and second coating films.

16. The method of manufacturing a decorative sheet according to claim 15, wherein completely curing the first and second coating films include
a second irradiation step in which the second coating film is irradiated with light having a wavelength of 200 nm or less, and
a subsequent third irradiation step in which the first and second coating films are irradiated with an ionizing radiation, or ultraviolet light having a longer wavelength than the light emitted in the second irradiation step.
